# EUROPEAN PATENT APPLICATION

(11) **EP 4 693 854 A1**
(43) Date of publication of application: **11.02.2026**
(21) Application number: 23936463.1
(22) Date of filing: 12.12.2023
(51) Int. Cl.: H02M 1/00

(54) **POWER SUPPLY CIRCUIT AND ELECTRONIC DEVICE**

(30) Priority: 06.05.2023 CN 202310508172
(71) Applicant: Huawei Technologies Co., Ltd., Shenzhen, Guangdong 518129 (CN)
(72) Inventor: LIU, Baiyi, Shenzhen, Guangdong 518129 (CN); ZHU, Xiang, Shenzhen, Guangdong 518129 (CN); CAI, Yuanbin, Shenzhen, Guangdong 518129 (CN); WU, Jiarui, Xianning West Road Xi'an, Shaanxi 710049 (CN); CHEN, Wenjie, Xianning West Road Xi'an, Shaanxi 710049 (CN); YANG, Xu, Xianning West Road Xi'an, Shaanxi 710049 (CN)
(74) Representative: Goddar, Heinz J.
(86) International application number: PCT/CN2023/138146
(87) International publication number: WO 2024/230159

(57) **Abstract**

This application provides a power supply circuit and an electronic device, to not only suppress a voltage spike generated in a process in which a load switches from a heavy load to a light load, and avoid damage to the load, but also suppress a significant voltage sag generated in a process in which the load switches from the light load to the heavy load, and ensure normal operation of the load. The power supply circuit may include a power conversion module, a compensation module, a sampling module, and a gain-adjustable drive module. The power conversion module is configured to: convert a first direct current voltage into a second direct current voltage and output the second direct current voltage to the load. The sampling module is configured to: collect a voltage of the load, convert the voltage of the load into a first sampling voltage, and output the first sampling voltage to the gain-adjustable drive module. The gain-adjustable drive module is configured to output a gain-adjustable drive voltage to the compensation module based on the first sampling voltage. The compensation module may be configured to output a compensation current to the load or bleed an output current of the power conversion module based on the first direct current voltage and the gain-adjustable drive voltage. The compensation current may be used to regulate the second direct current voltage.

## Description

This application claims priority to Chinese Patent Application No. 202310508172.9, filed with the China National Intellectual Property Administration on May 6, 2022 and entitled "POWER SUPPLY CIRCUIT AND ELECTRONIC DEVICE", which is incorporated herein by reference in its entirety.

### TECHNICAL FIELD

This application relates to the field of load power supply technologies, and more specifically, to a power supply circuit and an electronic device.

### BACKGROUND

As a power supply voltage of a load like a central processing unit (central processing unit, CPU) or a graphics processing unit (graphics processing unit, GPU) continuously decreases and a power supply current continuously increases, a requirement on a fast dynamic response capability of a power supply circuit is continuously increasing. In a process in which the load switches from a light load to a heavy load, a voltage spike is easily generated in an output voltage of the power supply circuit and causes damage to the load. In a process in which the load switches from the heavy load to the light load, a significant voltage sag is easily generated in the output voltage of the power supply circuit and causes insufficient power supply to the load and failure to operate normally.

Therefore, a power supply circuit that can avoid damage to a load and ensure normal operation of the load is urgently required.

### SUMMARY

This application provides a power supply circuit and an electronic device, to not only suppress a voltage spike generated in a process in which a load switches from a heavy load to a light load, and avoid damage to the load, but also suppress a significant voltage sag generated in a process in which the load switches from the light load to the heavy load, and ensure normal operation of the load.

According to a first aspect, this application provides a power supply circuit configured to supply power to a load. The load may be in a steady state or a dynamic state. The dynamic state may be that the load switches between a light load and a heavy load and include that the load switches from the light load to the heavy load (that is, a voltage sag occurs on the load) and that the load switches from the heavy load to the light load (that is, a voltage overshoot occurs on the load).

The power supply circuit provided in this application may include a power conversion module, a compensation module, a sampling module, and a gain-adjustable drive module.

An input of the power conversion module may be configured to receive a first direct current voltage, and an output of the power conversion module may be electrically connected to the load. An input of the sampling module may be electrically connected to the load, an output of the sampling module may be electrically connected to an input of the gain-adjustable drive module, an output of the gain-adjustable drive module may be electrically connected to the compensation module, and the compensation module may be electrically connected to the load.

Optionally, the power conversion module may be configured to: convert a first direct current voltage into a second direct current voltage and output the second direct current voltage to the load, where a voltage value of the second direct current voltage is less than a voltage value of the first direct current voltage. It can be learned that the power conversion module steps down a voltage.

The sampling module may be configured to: collect a voltage of the load, convert the voltage of the load into a first sampling voltage, and output the first sampling voltage to the gain-adjustable drive module.

The gain-adjustable drive module may be configured to output a gain-adjustable drive voltage to the compensation module based on the first sampling voltage.

The compensation module may be configured to output a compensation current to the load or bleed an output current of the power conversion module based on the first direct current voltage and the gain-adjustable drive voltage. The compensation current may be used to regulate the second direct current voltage.

According to the power supply circuit provided in this application, the gain-adjustable drive module can output the gain-adjustable drive voltage, and the compensation module can output the compensation current to the load or bleed the output current of the power conversion module based on the gain-adjustable drive voltage, to regulate the second direct current voltage. Bleeding the output current of the power conversion module can suppress a voltage spike generated in the process in which the load switches from the heavy load to the light load, and avoid damage to the load. In addition, the compensation current can suppress the significant voltage sag generated in the process in which the load switches from the light load to the heavy load, and ensure normal operation of the load.

It can be figured out that the compensation module operates only in the dynamic state of the load, and the power conversion module constantly operates, to be specific, the power conversion module can constantly output the second direct current voltage. This can reduce a loss of the compensation module in the steady state of the load, and improve efficiency of the power supply circuit.

In a possible implementation, the gain-adjustable drive module may include a first gain-adjustable drive unit and a second gain-adjustable drive unit.

An input of each of the first gain-adjustable drive unit and the second gain-adjustable drive unit may be electrically connected to the collection module, and an output of each of the first gain-adjustable drive unit and the second gain-adjustable drive unit may be electrically connected to the compensation module.

Optionally, the first gain-adjustable drive unit may be configured to output a first gain-adjustable drive voltage to the compensation module based on the first sampling voltage, where the first gain-adjustable drive voltage and the first sampling voltage may be in an inversely proportional relationship. It can be learned that the first gain-adjustable drive unit may have an inverting amplification function.

The second gain-adjustable drive unit may be configured to output a second gain-adjustable drive voltage to the compensation module based on the first sampling voltage, where the second gain-adjustable drive voltage and the first sampling voltage may be in a directly proportional relationship. It can be learned that the second gain-adjustable drive unit may have a non-inverting amplification function.

Further, the first gain-adjustable drive unit and the second gain-adjustable drive unit each may include a signal amplification circuit and a power amplification circuit that are connected in series.

An input of the signal amplification circuit may be electrically connected to the collection module, an output of the signal amplification circuit may be electrically connected to an input of the power amplification circuit, and an output of the power amplification circuit may be electrically connected to the compensation module.

Optionally, the signal amplification circuit may be configured to: amplify a gain of the first sampling voltage, and output a second sampling voltage, where the second sampling voltage may indicate the first sampling voltage after gain amplification.

The power amplification circuit may be configured to: amplify a power of the second sampling voltage, and output the first gain-adjustable drive voltage or the second gain-adjustable drive voltage.

It may be understood that the power amplification circuit of the first gain-adjustable drive unit may output the first gain-adjustable drive voltage to the compensation module. Likewise, the power amplification circuit of the second gain-adjustable drive unit may output the second gain-adjustable drive voltage to the compensation module. It may also be understood that because the signal amplification circuit can amplify the gain of the first sampling voltage, a gain of the first gain-adjustable drive voltage output by the first gain-adjustable drive unit can be adjusted, and a gain of the second gain-adjustable drive voltage output by the second gain-adjustable drive unit can be adjusted. This can adjust the compensation current, and further avoid damage to the load or ensure normal operation of the load.

It can be figured out that because the first gain-adjustable drive voltage and the first sampling voltage are in the inversely proportional relationship, the signal amplification circuit of the first gain-adjustable drive unit may be a non-inverting amplification circuit, and the power amplification circuit of the first gain-adjustable drive unit may be an inverting amplification circuit. Certainly, the signal amplification circuit of the first gain-adjustable drive unit may be an inverting amplification circuit, and the power amplification circuit of the first gain-adjustable drive unit may be a non-inverting amplification circuit.

Likewise, because the second gain-adjustable drive voltage and the first sampling voltage are in the directly proportional relationship, both the signal amplification circuit and the power amplification circuit of the second gain-adjustable drive unit may be non-inverting amplification circuits; or both the signal amplification circuit and the power amplification circuit of the second gain-adjustable drive unit may be inverting amplification circuits.

Further, the signal amplification circuit may be a proportional amplification circuit; and the power amplification circuit may include at least one of a common source amplification circuit, a common drain amplification circuit, and a common gate amplification circuit. In other words, the power amplification circuit may be the common source amplification circuit, the common drain amplification circuit, or the common gate amplification circuit, or may be a derived circuit including two or three of the common source amplification circuit, the common drain amplification circuit, and the common gate amplification circuit.

In another possible implementation, the compensation module may include a bias unit and a compensation unit that are connected in series.

An input of the bias unit may be configured to receive the first direct current voltage, and an output of the bias unit may be electrically connected to an input of the compensation unit.

Optionally, the bias unit may be configured to output a third direct current voltage to the compensation unit based on the first direct current voltage, where a voltage value of the third direct current voltage is less than the voltage value of the first direct current voltage. It can be learned that the bias unit steps down a voltage, and can reduce a loss of the compensation unit and improve operation efficiency of the power supply circuit.

The compensation unit may be configured to output the compensation current to the load based on the third direct current voltage, the first gain-adjustable drive voltage, and the second gain-adjustable drive voltage. This regulates the second direct current voltage, and reliably supplies power to the load.

Further, the bias unit may be of a non-isolated topology structure or an isolated topology structure, and output the third direct current voltage. The non-isolated topology structure may be a buck topology structure, a buck-boost topology structure, a push-pull topology structure, or the like. The isolated topology structure may be a resonant topology structure (which may include a resonant inductor, a resonant capacitor, and the like), a phase-shifted full-bridge topology structure, or the like.

For example, the bias unit may include a first switching transistor, a second switching transistor, a first inductor, and a first capacitor.

A first electrode of the first switching transistor may be configured to receive the first direct current voltage. A second electrode of the first switching transistor and a first electrode of the second switching transistor are electrically connected to a first terminal of the first inductor. A second electrode of the second switching transistor may be electrically connected to a ground terminal. A second terminal of the first inductor may be electrically connected to a first terminal of the first capacitor. A second terminal of the first capacitor may be electrically connected to the ground terminal.

It can be learned that the bias unit provided in this application may be of the buck topology structure. Certainly, the bias unit may alternatively be of another topology structure. This is not limited in this application.

In another example, the compensation unit may include a third switching transistor and a fourth switching transistor.

A control electrode of the third switching transistor may be electrically connected to the output of the power amplification circuit of the first gain-adjustable drive unit. In other words, a control electrode of the third switching transistor is configured to receive the first gain-adjustable drive voltage output by the power amplification circuit of the first gain-adjustable drive unit. Likewise, a control electrode of the fourth switching transistor may be electrically connected to the output of the power amplification circuit of the second gain-adjustable drive unit. In other words, a control electrode of the fourth switching transistor is configured to receive the second gain-adjustable drive voltage output by the signal amplification circuit of the second gain-adjustable drive unit. A first electrode of the third switching transistor is electrically connected to the bias unit, and a second electrode of the third switching transistor and a first electrode of the fourth switching transistor are electrically connected to the power amplification circuit of the first gain-adjustable drive unit. The second electrode of the third switching transistor and the first electrode of the fourth switching transistor may also be electrically connected to the load, and a second electrode of the fourth switching transistor may be electrically connected to the ground terminal.

It can be figured out that when the load is in the steady state, the first sampling voltage output by the sampling module is almost 0. The first gain-adjustable drive voltage output by the first gain-adjustable drive unit is less than a threshold voltage of the third switching transistor, and the second gain-adjustable drive voltage output by the second gain-adjustable drive unit is less than a threshold voltage of the fourth switching transistor. Therefore, the third switching transistor and the fourth switching transistor are not turned on, that is, the compensation module does not operate.

In an example, the third switching transistor and the fourth switching transistor may be metal-oxide-semiconductor field-effect transistors (Metal-Oxide-Semiconductor Field-Effect Transistors, MOSFETs) of a same type. For example, both the third switching transistor and the fourth switching transistor may be N-type MOSFETs (NMOS transistors for short). Alternatively, both the third switching transistor and the fourth switching transistor may be P-type MOSFETs (PMOS transistors for short).

Certainly, the third switching transistor and the fourth switching transistor may be MOSFETs of different types. For example, the third switching transistor may be an NMOS transistor, and the fourth switching transistor may be a PMOS transistor. Alternatively, the third switching transistor may be a PMOS transistor, and the fourth switching transistor may be an NMOS transistor.

In another example, the third switching transistor and the fourth switching transistor may alternatively be wide bandgap semiconductor devices such as gallium nitride GaN (gallium nitride) or silicon carbide SiC (silicon carbide).

It may be understood that a type of the third switching transistor and a type of the fourth switching transistor are not limited in this application.

When the load is in the dynamic state, the compensation unit may be configured to perform the following steps.

When the load switches from the heavy load to the light load, the first sampling voltage output by the sampling module may increase, and the compensation unit is configured to drive the first gain-adjustable drive voltage from the third switching transistor to decrease, and drive the second gain-adjustable drive voltage from the fourth switching transistor to increase. In a process in which the load switches from the heavy load to the light load, the first gain-adjustable drive voltage is less than the threshold voltage of the third switching transistor, and the second gain-adjustable drive voltage is greater than the threshold voltage of the fourth switching transistor. Therefore, the third switching transistor remains turned-off, and the fourth switching transistor may be turned on based on the second gain-adjustable drive voltage, and bleed the output current of the power conversion module. In other words, when the voltage overshoot occurs on the load, the output current of the power conversion module may be bleed to the ground terminal through the turned-on fourth switching transistor, to avoid damage to the load.

When the load switches from the light load to the heavy load, the first sampling voltage output by the sampling module may decrease, and the compensation unit is configured to drive the first gain-adjustable drive voltage from the third switching transistor to increase, and drive the second gain-adjustable drive voltage from the fourth switching transistor decrease. In a process in which the load switches from the light load to the heavy load, the first gain-adjustable drive voltage is greater than the threshold voltage of the third switching transistor, and the second gain-adjustable drive voltage is less than the threshold voltage of the fourth switching transistor. Therefore, the fourth switching transistor remains turned-off, and the third switching transistor may be turned on based on the first gain-adjustable drive voltage, and output the compensation current to the load. In other words, when the voltage sag occurs on the load, the compensation unit may output the compensation current to the load through the turned-on third switching transistor, to ensure normal operation of the load.

Further, in addition to the bias unit and the compensation unit, the compensation module may further include an energy recovery unit, and the energy recovery unit may be connected in parallel to the compensation unit.

The energy recovery unit may be configured to: when the load switches from the heavy load to the light load, transmit a first-part output current of the power conversion module to the bias unit based on the second direct current voltage. It can be figured out that an input of the energy recovery unit is electrically connected to the load, and an output of the energy recovery unit may be electrically connected to the bias unit.

The bias unit may further be configured to: store electric energy based on the first-part output current of the power conversion module; and release the electric energy to the load by using the compensation unit when the load switches from the light load to the heavy load. It can be learned that the bias unit stores electric energy and releases the electric energy.

The compensation unit may further be configured to: bleed a second-part output current of the power conversion module when the load switches from the heavy load to the light load. It can be figured out that the fourth switching transistor is turned on when the load switches from the heavy load to the light load. In this case, the second-part output current of the power conversion module may be bled to the ground terminal through the fourth switching transistor.

It can be learned that when the load switches from the heavy load to the light load, the output current of the power conversion module may be divided into the first-part output current and the second-part output current. The first-part output current is for storage of the electric energy, and the second-part output current is bled through the fourth switching transistor. This not only implements energy recovery, but also avoid damage to the load caused by the voltage overshoot.

It can be understood that the energy recovery unit operates only when the load switches from the heavy load to the light load, and recovers electric energy. This can reduce the loss of the compensation module, that is, improve operation efficiency of the compensation module, and further improve the operation efficiency of the power supply circuit. However, the bias unit can operate when the load switches from the heavy load to the light load and when the load switches from the light load to the heavy load. Similar to the bias unit, the compensation unit can also operate when the load switches from the heavy load to the light load and when the load switches from the light load to the heavy load. In this way, the compensation current can be used to regulate the second direct current voltage and bleed the second-part output current of the power conversion module.

Certainly, the output of the energy recovery unit may alternatively be electrically connected to a direct current power supply that provides the first direct current voltage. Therefore, when the load switches from the heavy load to the light load, the energy recovery unit can transmit, based on the second direct current voltage, the first-part output current of the power conversion module to the direct current power supply that provides the first direct current voltage, to improve the operation efficiency of the power supply circuit.

In still another possible implementation, the power conversion module may include a plurality of power conversion units and a second capacitor.

The plurality of power conversion units are connected in parallel to form a parallel branch. A first end of the parallel branch may be used as an input of each of the plurality of power conversion units, that is, may be used as the input of the power conversion module. The first end of the parallel branch is configured to receive the first direct current voltage. A second end of the parallel branch may be used as an output of each power conversion unit, that is, may be used as the output of the power conversion module. The second end of the parallel branch may be electrically connected to the collection module and the load. A first terminal of the second capacitor may be electrically connected to the second end of the parallel branch, and a second terminal of the second capacitor may be configured to be electrically connected to the ground terminal.

Each power conversion unit may be configured to: convert the first direct current voltage into the second direct current voltage, and output the second direct current voltage to the load, to supply power to the load.

In a possible implementation, the energy recovery unit and the power conversion units each may include a fifth switching transistor, a sixth switching transistor, and a second inductor.

A first electrode of the fifth switching transistor may be used as the output of the energy recovery unit or the input of each power conversion unit. Both a second electrode of the fifth switching transistor and a first electrode of the sixth switching transistor may be electrically connected to a first terminal of the second inductor. A second electrode of the sixth switching transistor may be electrically connected to the ground terminal. A second terminal of the second inductor may be used as the input of the energy recovery unit or the output of each power conversion unit.

It can be learned that the energy recovery unit and the power conversion unit in this application are of a same topology structure. Certainly, the energy recovery unit and the power conversion unit may alternatively be of another topology structure. This is not limited in this application.

In still another possible implementation, the sampling module may include a third capacitor and a first resistor.

A first terminal of the third capacitor may be used as the input of the sampling module, and the first terminal of the third capacitor is electrically connected to the power conversion module and the load. A second terminal of the third capacitor may be electrically connected to a first terminal of the first resistor, and a second terminal of the first resistor is electrically connected to the ground terminal. The second terminal of the third capacitor and the first terminal of the first resistor may be used as the output, of the sampling module, configured to output the first sampling voltage.

In an example, the first gain-adjustable drive unit may include a first signal amplification circuit and a second power amplification circuit that are connected in series. An input of the first signal amplification circuit may be electrically connected to the output of the sampling module, an output of the first signal amplification circuit may be electrically connected to an input of the first power amplification circuit, and an output of the first power amplification circuit may be electrically connected to the control electrode of the third switching transistor, that is, electrically connected to the compensation module.

The first signal amplification circuit may include a first proportional amplifier, a second resistor, a third resistor, a fourth resistor, a fifth resistor, a first direct current power supply, and a second direct current power supply.

Optionally, a first terminal of each of the second resistor and the third resistor may be electrically connected to an inverting input of the first proportional amplifier. A second terminal of the second resistor may be electrically connected to the ground terminal, and a second terminal of the third resistor may be electrically connected to an output of the first proportional amplifier. The second terminal of the third resistor and the output of the first proportional amplifier may be used as the output, of the first signal amplification circuit, configured to be electrically connected to the control electrode of the third switching transistor. A first terminal of each of the fourth resistor and the fifth resistor may be electrically connected to a non-inverting input of the first proportional amplifier, and a second terminal of the fourth resistor may be used as the input, of the first signal amplification circuit, configured to be electrically connected to the output of the sampling module. A second terminal of the fifth resistor may be electrically connected to a first terminal of the second direct current power supply, and a second terminal of the second direct current power supply may be electrically connected to the ground terminal. A first terminal of the first direct current power supply may be electrically connected to the first power amplification circuit, and a second terminal of the first direct current power supply may be electrically connected to the ground terminal.

It can be learned that the non-inverting input of the first proportional amplifier may be electrically connected to the sampling module. In this case, the first signal amplification circuit may adjust a gain of the first sampling voltage by using the first proportional amplifier or the like, to turn on the third switching transistor by using the first gain-adjustable drive voltage, and enable the compensation current output by the compensation module to be adjustable. This further ensures normal operation of the load.

Similar to the first gain-adjustable drive circuit, the second gain-adjustable drive unit may include a second signal amplification circuit and a second power amplification circuit that are connected in series. An input of the second signal amplification circuit may be electrically connected to the output of the sampling module, an output of the second signal amplification circuit may be electrically connected to an input of the second power amplification circuit, and an output of the second power amplification circuit may be electrically connected to the control electrode of the fourth switching transistor, that is, electrically connected to the compensation module.

The second signal amplification circuit may include a second proportional amplifier, a sixth resistor, a seventh resistor, an eighth resistor, a third direct current power supply, and a fourth direct current power supply.

Optionally, a first terminal of each of the sixth resistor and the seventh resistor may be electrically connected to an inverting input of the second proportional amplifier. A second terminal of the sixth resistor may be used as the input, of the second signal amplification circuit, that may be configured to be electrically connected to the output of the sampling module. A second terminal of the seventh resistor may be electrically connected to an output of the second proportional amplifier, and the second terminal of the seventh resistor and the output of the second proportional amplifier may be used as the output of the second signal amplification circuit. A first terminal of the eighth resistor may be electrically connected to a non-inverting input of the second proportional amplifier. A second terminal of the eighth resistor may be electrically connected to a first terminal of the fourth direct current power supply, and a second terminal of the fourth direct current power supply may be electrically connected to the ground terminal. A first terminal of the third direct current power supply may be electrically connected to the second power amplification circuit, and a second terminal of the third direct current power supply may be electrically connected to the ground terminal.

It can be learned that the inverting input of the second proportional amplifier may be electrically connected to the sampling module. In this case, the second signal amplification circuit may adjust the gain of the first sampling voltage by using the second proportional amplifier or the like, to turn on the fourth switching transistor by using the second gain-adjustable drive voltage, and bleed the output current of the power conversion module. This further avoids damage to the load.

For example, the first power amplification circuit and the second power amplification circuit each may include a seventh switching transistor and a ninth resistor.

A first terminal of the ninth resistor may be electrically connected to the first terminal of the first direct current power supply or the first terminal of the third direct current power supply. A second terminal of the ninth resistor may be electrically connected to a first electrode of the seventh switching transistor. The second terminal of the ninth resistor and the first electrode of the seventh switching transistor may be used as the output of the first power amplification circuit or the second power amplification circuit. A control electrode of the seventh switching transistor may be electrically connected to the first signal amplification circuit or the second signal amplification circuit. A second electrode of the seventh switching transistor of the first power amplification circuit may be electrically connected to the second electrode of the third switching transistor and the first electrode of the fourth switching transistor of the compensation module. A second electrode of the seventh switching transistor of the second power amplification circuit may be electrically connected to the ground terminal.

In this application, the compensation module can output a compensation current with a faster response speed by using the third switching transistor. However, compared with the power conversion module, the compensation module has lower operation efficiency. Opposite to the compensation module, the power conversion module has higher operation efficiency, but the second direct current voltage output by the power conversion module has a slower response speed. After being connected in parallel, the compensation module and the power conversion module are electrically connected to the load. The compensation current output by the compensation module may be used to regulate the second direct current voltage output by the power conversion module, so that the power conversion module and the compensation module complement each other in terms of functions. In this way, the power supply circuit has advantages of a fast response speed and high operation efficiency.

According to a second aspect, this application provides an electronic device, including a load and the power supply circuit provided in the first aspect and the possible implementations of the first aspect. The power supply circuit is electrically connected to the load, and is configured to supply power to the load.

It should be understood that the technical solution in the second aspect of this application is consistent with that in the first aspect of this application, and beneficial effect achieved by the aspects and the corresponding feasible implementations is similar. Details are not described again.

### BRIEF DESCRIPTION OF DRAWINGS

To describe technical solutions in this application or in the conventional technology more clearly, the following briefly describes accompanying drawings for describing embodiments or the conventional technology. It is clearly that the accompanying drawings in the following descriptions show some embodiments of this application, and a person of ordinary skill in the art may still derive other accompanying drawings from these accompanying drawings without creative efforts.
FIG. 1 is a diagram of a structure of a power supply circuit 100 according to an embodiment of this application;
FIG. 2 is a diagram of another structure of a power supply circuit 100 according to an embodiment of this application;
FIG. 3 is a diagram of still another structure of a power supply circuit 100 according to an embodiment of this application;
FIG. 4 is a diagram of a waveform of an output voltage of a power supply circuit according to the technology;
FIG. 5 is a diagram of a waveform of a second direct current voltage output by a power supply circuit 100 according to an embodiment of this application;
FIG. 6 is a diagram of a waveform of a compensation current when a load switches from a heavy load to a light load according to an embodiment of this application;
FIG. 7 is a diagram of a waveform of a compensation current when a load switches from a light load to a heavy load according to an embodiment of this application;
FIG. 8 is a diagram of a waveform of a second gain-adjustable drive voltage when a load switches from a heavy load to a light load according to an embodiment of this application; and
FIG. 9 is a diagram of a waveform of a first gain-adjustable drive voltage when a load switches from a light load to a heavy load according to an embodiment of this application.

### DESCRIPTION OF EMBODIMENTS

The following describes technical solutions of this application with reference to accompanying drawings.

In the specification, embodiments, claims, and accompanying drawings of this application, the terms "first", "second", and the like are merely intended for distinguishing and description, and shall not be understood as indicating or implying relative importance, or indicating or implying a sequence. In addition, the terms "include", "have", and any variant thereof are intended to cover non-exclusive inclusion, for example, include a series of steps or units. A method, system, product, or device is not necessarily limited to those steps or units expressly listed, but may include other steps or units not expressly listed or inherent to such a process, method, product, or device.

It should be understood that in this application, "at least one piece (item)" refers to one or more and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

As a power supply voltage of a load like a central processing unit (central processing unit, CPU) or a graphics processing unit (graphics processing unit, GPU) continuously decreases and a power supply current continuously increases, a requirement on a fast dynamic response capability of a power supply circuit is continuously increasing. In a process in which the load switches from a light load to a heavy load, a voltage spike is easily generated in an output voltage of the power supply circuit and causes damage to the load. In a process in which the load switches from the heavy load to the light load, a significant voltage sag is easily generated in the output voltage of the power supply circuit and causes insufficient power supply to the load and failure to operate normally.

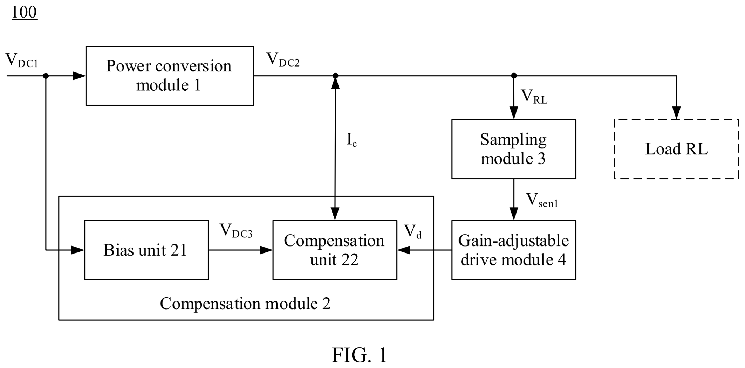

To overcome disadvantages of the conventional technology, embodiments of this application provide a power supply circuit, as shown in FIG. 1. The power supply circuit 100 may be configured to supply power to a load. The load may be in a steady state or a dynamic state. The dynamic state may be that the load switches between a light load and a heavy load and include that the load switches from the light load to the heavy load (that is, a voltage sag occurs on the load) and that the load switches from the heavy load to the light load (that is, a voltage overshoot occurs on the load).

Refer to FIG. 1. The power supply circuit 100 may include a power conversion module 1, a compensation module 2, a sampling module 3, and a gain-adjustable drive module 4.

An input of the power conversion module 1 may be configured to receive a first direct current voltage (which may be represented by V_{DC1}), and an output of the power conversion module 1 may be electrically connected to the load RL. An input of the sampling module 3 may be electrically connected to the load RL, an output of the sampling module 3 may be electrically connected to an input of the gain-adjustable drive module 4, an output of the gain-adjustable drive module 4 may be electrically connected to the compensation module 2, and the compensation module 2 may be electrically connected to the load RL.

Optionally, the power conversion module 1 may be configured to: convert the first direct current voltage V_{DC1} into a second direct current voltage (which may be represented by V_{DC2}) and output the second direct current voltage to the load RL, where a voltage value V_{DC2} of the second direct current voltage is less than a voltage value of the first direct current voltage V_{DC1}. It can be learned that the power conversion module 1 steps down a voltage.

The sampling module 3 may be configured to: collect a voltage (which may be represented by V_{RL}) of the load RL, convert the voltage V_{RL} of the load into a first sampling voltage (which may be represented by Vₛₑₙ₁), and output the first sampling voltage to the gain-adjustable drive module 4.

The gain-adjustable drive module 4 may be configured to output a gain-adjustable drive voltage (which may be represented by V_{d}) to the compensation module 2 based on the first sampling voltage Vₛₑₙ₁.

The compensation module 2 may be configured to output a compensation current (which may be represented by I_{c}) to the load RL or bleed an output current (which may be represented by Iₒᵤₜ) of the power conversion module 1 based on the first direct current voltage V_{DC1} and the gain-adjustable drive voltage V_{d}, where the compensation current I_{c} may be used to regulate the second direct current voltage V_{DC2}.

According to the power supply circuit 100 provided in embodiments of this application, the gain-adjustable drive module 4 can output the gain-adjustable drive voltage V_{d}, and the compensation module 2 can output the compensation current I_{c} to the load RL or bleed the output current Iₒᵤₜ of the power conversion module 1 based on the gain-adjustable drive voltage V_{d}, to regulate the second direct current voltage V_{DC2}. Bleeding the output current Iₒᵤₜ of the power conversion module can suppress a voltage spike generated in the process in which the load RL switches from the heavy load to the light load, and avoid damage to the load RL. In addition, the compensation current I_{c} can suppress the significant voltage sag generated in the process in which the load RL switches from the light load to the heavy load, and ensure normal operation of the load RL.

It can be figured out that the compensation module 2 operates only in the dynamic state of the load RL, and the power conversion module 1 constantly operates, to be specific, the power conversion module 1 can constantly output the second direct current voltage V_{DC2}. This can reduce a loss of the compensation module 2 in the steady state of the load RL, and improve efficiency of the power supply circuit 100.

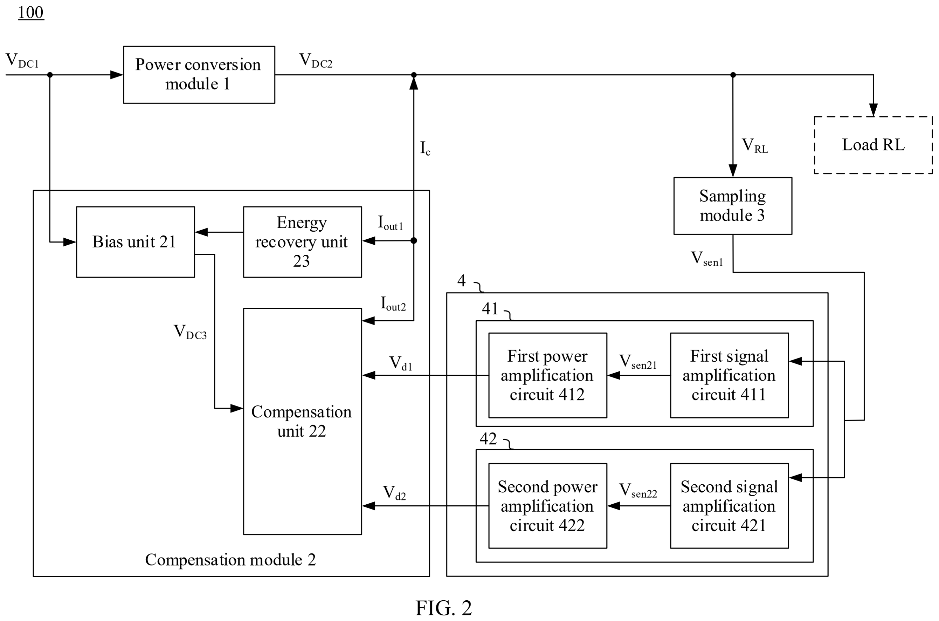

In some embodiments, as shown in FIG. 2, the gain-adjustable drive module 4 may include a first gain-adjustable drive unit 41 and a second gain-adjustable drive unit 42.

An input of each of the first gain-adjustable drive unit 41 and the second gain-adjustable drive unit may be electrically connected to the collection module 3, and an output of each of the first gain-adjustable drive unit 41 and the second gain-adjustable drive unit 42 may be electrically connected to the compensation module 2.

Optionally, the first gain-adjustable drive unit 41 may be configured to output a first gain-adjustable drive voltage (which may be represented by V_{d1}) to the compensation module 2 based on the first sampling voltage Vₛₑₙ₁, where the first gain-adjustable drive voltage V_{d1} and the first sampling voltage Vₛₑₙ₁ may be in an inversely proportional relationship. It can be learned that the first gain-adjustable drive unit 41 may have an inverting amplification function.

The second gain-adjustable drive unit 42 may be configured to output a second gain-adjustable drive voltage (which may be represented by V_{d2}) to the compensation module 2 based on the first sampling voltage Vₛₑₙ₁, where the second gain-adjustable drive voltage V_{d2} and the first sampling voltage Vₛₑₙ₁ may be in a directly proportional relationship. It can be learned that the second gain-adjustable drive unit 42 may have a non-inverting amplification function.

It can be learned that the gain-adjustable drive voltage V_{d} may include the first gain-adjustable drive voltage V_{d1} and the second gain-adjustable drive voltage V_{d2}.

Still refer to FIG. 2. The first gain-adjustable drive unit 41 may include a first signal amplification circuit 411 and a first power amplification circuit 412 that are connected in series. An input of the first signal amplification circuit 411 may be electrically connected to the output of the sampling module 3, an output of the first signal amplification circuit 411 may be electrically connected to an input of the first power amplification circuit 412, and an output of the first power amplification circuit 412 may be electrically connected to the compensation module 2.

Optionally, the first signal amplification circuit 411 may be configured to: amplify a gain of the first sampling voltage Vₛₑₙ₁, and output a second sampling voltage (which may be represented by Vₛₑₙ₂₁), where the second sampling voltage Vₛₑₙ₂₁ may be an output voltage of the first signal amplification circuit 411 and indicate the first sampling voltage Vₛₑₙ₁ after gain amplification.

The first power amplification circuit 412 may be configured to: amplify a power of the second sampling voltage Vₛₑₙ₂₁, and output the first gain-adjustable drive voltage V_{d1}.

Similar to the first gain-adjustable drive circuit 41, the second gain-adjustable drive unit 42 may include a second signal amplification circuit 421 and a second power amplification circuit 422 that are connected in series. An input of the second signal amplification circuit 421 may be electrically connected to the output of the sampling module 3, an output of the second signal amplification circuit 421 may be electrically connected to an input of the second power amplification circuit 422, and an output of the second power amplification circuit 422 may be electrically connected to the compensation module 2.

Optionally, the second signal amplification circuit 421 may be configured to: amplify a gain of the first sampling voltage Vₛₑₙ₁, and output a second sampling voltage (which may be represented by Vₛₑₙ₂₂), where the second sampling voltage Vₛₑₙ₂₂ may be an output voltage of the second signal amplification circuit 421 and also indicate the first sampling voltage Vₛₑₙ₁ after gain amplification.

The second power amplification circuit 422 may be configured to: amplify a power of the second sampling voltage Vₛₑₙ₂₂, and output the second gain-adjustable drive voltage V_{d2}.

It can be learned that the first gain-adjustable drive circuit 41 and the second gain-adjustable drive circuit 42 each may include a signal amplification circuit (namely, the first signal amplification circuit or the second signal amplification circuit) and a power amplification circuit (namely, the first power amplification circuit and the second power amplification circuit).

The signal amplification circuit may be configured to amplify the gain of the first sampling voltage Vₛₑₙ₁. The power amplification circuit 4 may be configured to: amplify the power of the second sampling voltage (Vₛₑₙ₂₁ or Vₛₑₙ₂₂), and output a gain-adjustable drive voltage (the first gain-adjustable drive voltage V_{d1} or the second gain-adjustable drive voltage V_{d2}).

It may be understood that the first power amplification circuit 412 may output the first gain-adjustable drive voltage V_{d1} to the compensation module 2. Likewise, the second power amplification circuit 422 may output the second gain-adjustable drive voltage V_{d2} to the compensation module 2. It may also be understood that because the first signal amplification circuit/second signal amplification circuit can amplify the gain of the first sampling voltage Vₛₑₙ₁, a gain of the first gain-adjustable drive voltage V_{d1} can be adjusted, and a gain of the second gain-adjustable drive voltage V_{d2} can be adjusted. This can adjust the compensation current I_{c}, and further avoid damage to the load RL or ensure normal operation of the load RL.

It can be figured out that because the first gain-adjustable drive voltage V_{d1} and the first sampling voltage Vₛₑₙ₁ are in the inversely proportional relationship, the first signal amplification circuit 411 may be a non-inverting amplification circuit, and the first power amplification circuit 412 may be an inverting amplification circuit. Certainly, the first signal amplification circuit 411 may be an inverting amplification circuit, and the first power amplification circuit 412 may be a non-inverting amplification circuit.

Likewise, because the second gain-adjustable drive voltage V_{d2} and the first sampling voltage Vₛₑₙ₁ are in the directly proportional relationship, both the second signal amplification circuit 421 and the second power amplification circuit 422 may be non-inverting amplification circuits; or both the second signal amplification circuit 421 and the second power amplification circuit 422 may be inverting amplification circuits.

Further, the first signal amplification circuit 411 and the second signal amplification circuit 421 each may be a proportional amplification circuit. The first power amplification circuit 412 may include at least one of a common source amplification circuit, a common drain amplification circuit, and a common gate amplification circuit. In other words, the first power amplification circuit 412 may be the common source amplification circuit, the common drain amplification circuit, or the common gate amplification circuit, or may be a derived circuit including two or three of the common source amplification circuit, the common drain amplification circuit, and the common gate amplification circuit. Likewise, the second power amplification circuit 422 may also include at least one of a common source amplification circuit, a common drain amplification circuit, and a common gate amplification circuit.

In some embodiments, as shown in FIG. 1, the compensation module 2 may include a bias unit 21 and a compensation unit 22 that are connected in series.

An input of the bias unit 21 may be configured to receive the first direct current voltage V_{DC1}, and an output of the bias unit 21 may be electrically connected to an input of the compensation unit 22.

Optionally, the bias unit 21 may be configured to output a third direct current voltage (which may be represented by V_{DC3}) to the compensation unit 22 based on the first direct current voltage V_{DC1}, where a voltage value of the third direct current voltage V_{DC3} is less than the voltage value of the first direct current voltage V_{DC1}. It can be learned that the bias unit 21 steps down a voltage, and can reduce a loss of the compensation unit 22 and improve operation efficiency of the power supply circuit 100.

The compensation unit 22 may be configured to output the compensation current I_{c} to the load RL based on the third direct current voltage V_{DC3}, the first gain-adjustable drive voltage V_{d1}, and the second gain-adjustable drive voltage V_{d2}. This regulates the second direct current voltage V_{DC2}, and reliably supplies power to the load RL.

Further, in addition to the bias unit 21 and the compensation unit 22, the compensation module 2 may further include an energy recovery unit 23, as shown in FIG. 2, and the energy recovery unit 23 may be connected in parallel to the compensation unit 22.

The energy recovery unit 23 may be configured to transmit a first-part output current (namely, a part of the output current Iₒᵤₜ of the power conversion module 1, which may be represented by Iₒᵤₜ₁) of the power conversion module 1 to the bias unit 21 based on the second direct current voltage V_{DC2} when the load RL switches from the heavy load to the light load. It can be figured out that an input of the energy recovery unit 23 is electrically connected to the load RL, and an output of the energy recovery unit RL may be electrically connected to the bias unit 21. It may be further figured out that a voltage value of an output voltage of the energy recovery unit 23 is greater than a voltage value of an input voltage of the energy recovery unit. In other words, the energy recovery unit 23 steps up a voltage.

The bias unit 21 may further be configured to: store electric energy based on the first-part output current Iₒᵤₜ₁ of the power conversion module 1; and release the electric energy to the load RL by using the compensation unit 22 when the load RL switches from the light load to the heavy load. It can be learned that the bias unit 21 stores electric energy and releases the electric energy.

The compensation unit 22 may further be configured to bleed a second-part output current (namely, the other part of the output current Iₒᵤₜ of the power conversion module 1, which may be represented by Iₒᵤₜ₂) of the power conversion module 1 when the load RL switches from the heavy load to the light load.

It can be learned that when the load RL switches from the heavy load to the light load, the output current of the power conversion module 1 may be divided into the first-part output current Iₒᵤₜ₁ and the second-part output current Iₒᵤₜ₂. The first-part output current Iₒᵤₜ₁ is for storage of the electric energy, and the second-part output current Iₒᵤₜ₂ is bled through the compensation module 22. This not only implements energy recovery, but also does not cause damage to the load RL.

It can be understood that the energy recovery unit 23 operates only when the load RL switches from the heavy load to the light load, and recovers electric energy. This can reduce the loss of the compensation module 2, that is, improve operation efficiency of the compensation module 2, and further improve the operation efficiency of the power supply circuit 100. However, the bias unit 21 can operate when the load RL switches from the heavy load to the light load and when the load RL switches from the light load to the heavy load. Similar to the bias unit 21, the compensation unit 22 can also operate when the load RL switches from the heavy load to the light load and when the load RL switches from the light load to the heavy load. In this way, the compensation current I_{c} can be used to regulate the second direct current voltage V_{DC2} and bleed the second-part output current Iₒᵤₜ₂ of the power conversion module 1.

Certainly, the output of the energy recovery unit 23 may alternatively be electrically connected to a direct current power supply that provides the first direct current voltage V_{DC1}. Therefore, when the load RL switches from the heavy load to the light load, the energy recovery unit 23 can transmit, based on the second direct current voltage V_{DC2}, the first-part output current Iₒᵤₜ₁ of the power conversion module 1 to the direct current power supply that provides the first direct current voltage V_{DC1}, to improve the operation efficiency of the power supply circuit 100.

For example, the bias unit 21 may be of a non-isolated topology structure or an isolated topology structure, and output the third direct current voltage V_{DC3}. The non-isolated topology structure may be a buck topology structure, a buck-boost topology structure, a push-pull topology structure, or the like. The isolated topology structure may be a resonant topology structure (which may include a resonant inductor, a resonant capacitor, and the like), a phase-shifted full-bridge topology structure, or the like.

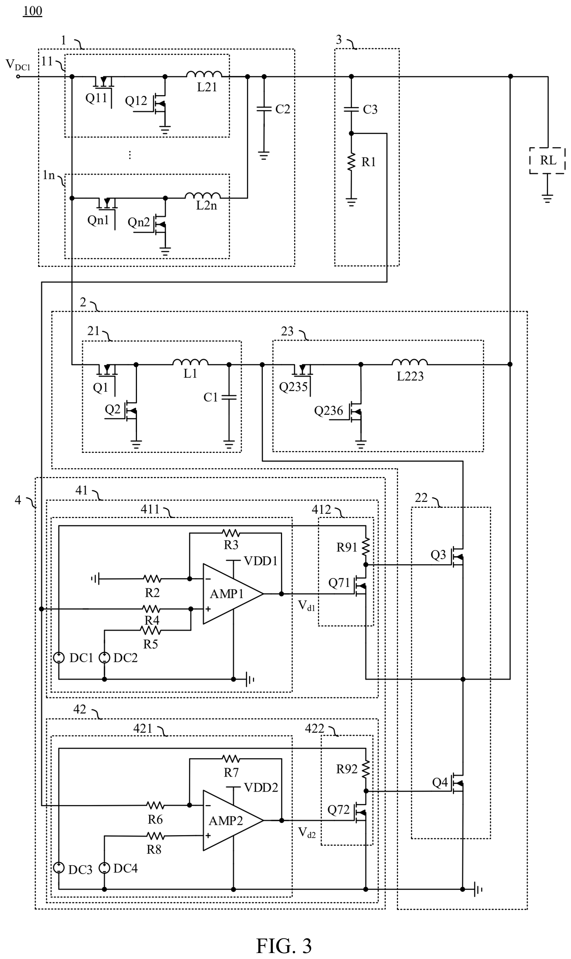

In embodiments of this application, the bias unit 21 is a buck topology circuit, as shown in FIG. 3. The bias unit 21 may include a switching transistor Q1 (namely, a first switching transistor), a switching transistor Q2 (namely, a second switching transistor), an inductor L1 (namely, a first inductor), and a capacitor C1 (namely, a first capacitor). In embodiments of this application, an example in which the switching transistor Q1 and the switching transistor Q2 are NMOS transistors is used.

Optionally, a first electrode (which may be a drain) of the switching transistor Q1 may be configured to receive the first direct current voltage V_{DC1}. A second electrode (which may be a source) of the switching transistor Q1 and a first electrode (which may be a drain) of the switching transistor Q2 are electrically connected to a first terminal of the inductor L1. A second electrode (which may be a source) of the switching transistor Q2 may be electrically connected to a ground terminal. A second terminal of the inductor L1 may be electrically connected to a first terminal of the capacitor C1. A second terminal of the capacitor C1 may be electrically connected to the ground terminal.

In an example, refer to FIG. 3. The compensation unit 22 may include a switching transistor Q3 (namely, a third switching transistor) and a switching transistor Q4 (namely, a fourth switching transistor).

For example, the switching transistor Q3 and the switching transistor Q4 may be MOSFETs of a same type. For example, the switching transistor Q3 and the switching transistor Q4 may be NMOS transistors. Alternatively, the switching transistor Q3 and the switching transistor Q4 may be PMOS transistors. Certainly, the switching transistor Q3 and the switching transistor Q4 may be MOSFETs of different types. For example, the switching transistor Q3 may be an NMOS transistor, and the switching transistor Q4 may be a PMOS transistor. Alternatively, the switching transistor Q3 may be a PMOS transistor, and the switching transistor Q4 may be an NMOS transistor. In embodiments of this application, the switching transistor Q3 and the switching transistor Q4 may be NMOS transistors.

Optionally, a control electrode of the switching transistor Q3 may be electrically connected to the output of the first power amplification circuit 412. In other words, a control electrode of the switching transistor Q3 may be configured to receive the first gain-adjustable drive voltage V_{d1} output by the first power amplification circuit 412. Likewise, a control electrode of the switching transistor Q4 may be electrically connected to the output of the second power amplification circuit 422. In other words, a control electrode of the switching transistor Q4 is configured to receive the second gain-adjustable drive voltage V_{d2} output by the second power amplification circuit 422. A first electrode (which may be a drain) of the switching transistor Q3 may be electrically connected to the bias unit 21, and a second electrode (which may be a source) of the switching transistor Q3 and a first electrode (which may be a drain) of the switching transistor Q4 are electrically connected to the first signal amplification circuit 411. The second electrode of the switching transistor Q3 and the first electrode of the switching transistor Q4 may also be electrically connected to the load RL, and a second electrode (which may be a source) of the switching transistor Q4 may be electrically connected to the ground terminal.

It can be figured out that when the load RL is in the steady state, the first sampling voltage Vₛₑₙ₁ output by the sampling module 3 is almost 0. The first gain-adjustable drive voltage V_{d1} output by the first gain-adjustable drive unit 41 is less than a threshold voltage of the switching transistor Q3, and the second gain-adjustable drive voltage V_{d2} output by the second gain-adjustable drive unit 42 is less than a threshold voltage of the switching transistor Q4. Therefore, the switching transistor Q3 and the switching transistor Q4 are not turned on, that is, the compensation module 2 may not operate.

Because the dynamic state of the load RL may include two cases of switching from the light load to the heavy load and switching from the heavy load to the light load, the compensation unit may be specifically configured to perform the following steps.

When the load RL switches from the heavy load to the light load, the first sampling voltage Vₛₑₙ₁ output by the sampling module 3 may a positive value, and the compensation unit is configured to drive the first gain-adjustable drive voltage V_{d1} from the switching transistor Q3 to decrease, and drive the second gain-adjustable drive voltage V_{d2} from the switching transistor Q4 to increase. The first gain-adjustable drive voltage V_{d1} is less than the threshold voltage of the switching transistor Q3, and the second gain-adjustable drive voltage V_{d2} is greater than the threshold voltage of the switching transistor Q4. Therefore, the switching transistor Q3 remains turned-off, and the switching transistor Q4 may be turned on based on the second gain-adjustable drive voltage V_{d2}, and bleed the output current Iₒᵤₜ of the power conversion module 1. In other words, when the voltage overshoot occurs on the load RL, the output current Iₒᵤₜ of the power conversion module 1 may be bleed to the ground terminal through the turned-on switching transistor Q4, to avoid damage to the load RL.

When the load RL switches from the light load to the heavy load, the first sampling voltage Vₛₑₙ₁ output by the sampling module 3 may a negative value, and the compensation unit is configured to drive the first gain-adjustable drive voltage V_{d1} from the switching transistor Q3 to increase, and drive the second gain-adjustable drive voltage V_{d2} from the switching transistor Q4 to decrease. The first gain-adjustable drive voltage V_{d1} is greater than the threshold voltage of the switching transistor Q3, and the second gain-adjustable drive voltage V_{d2} is less than the threshold voltage of the switching transistor Q4. Therefore, the switching transistor Q4 remains turned-off, and the switching transistor Q3 may be turned on based on the first gain-adjustable drive voltage V_{d1}, and output the compensation current I_{c} to the load RL. In other words, when the voltage sag occurs on the load RL, the compensation unit 22 may output the compensation current I_{c} to the load RL through the turned-on switching transistor Q3, to ensure normal operation of the load RL.

In another example, still refer to FIG. 3. The power conversion module 1 may include a plurality of power conversion units and a capacitor C2 (namely, a second capacitor). The plurality of power conversion units may include a power conversion unit 11 to a power conversion unit 1n. The power conversion unit 11 to the power conversion unit 1n are connected in parallel to form a parallel branch. A first end of the parallel branch may be used as an input of each of the plurality of power conversion units, that is, may be used as the input of the power conversion module 1. The first end of the parallel branch is configured to receive the first direct current voltage V_{DCI}. A second end of the parallel branch may be used as an output of each power conversion unit, that is, may be used as the output of the power conversion module 1. The second end of the parallel branch may be electrically connected to the collection module 3 and the load RL. A first terminal of the capacitor C2 may be electrically connected to the second end of the parallel branch, and a second terminal of the capacitor C2 may be configured to be electrically connected to the ground terminal.

Each power conversion unit may be configured to: convert the first direct current voltage V_{DC1} into the second direct current voltage V_{DC2}, and output the second direct current voltage to the load RL, to supply power to the load RL.

In another embodiment, the energy recovery unit 23 may include a switching transistor Q235 (namely, a fifth switching transistor), a switching transistor Q236 (namely, a sixth switching transistor), and an inductor L223 (namely, a second inductor). In embodiments of this application, an example in which the switching transistor Q235 and the switching transistor Q236 are NMOS transistors is used.

A first electrode (which may be a drain) of the switching transistor Q235 may be used as the output of the energy recovery unit 23, and is electrically connected to the inductor L1 and the capacitor C1 of the bias unit 21. Both a second electrode (which may be a source) of the switching transistor Q235 and a first electrode (which may be a drain) of the switching transistor Q236 are electrically connected to a first terminal of the inductor L223. A second electrode (which may be a source) of the switching transistor Q236 may be electrically connected to the ground terminal. A second terminal of the inductor L223 may be used as the input of the energy recovery unit 23, and is electrically connected to the load RL.

The following describe a topology structure of the power conversion unit by using the power conversion unit 11 and the power conversion unit In as examples.

The power conversion unit 11 may include a switching transistor Q11 (namely, a fifth switching transistor), a switching transistor Q12 (namely, a sixth switching transistor), and an inductor L21 (namely, a second inductor). In embodiments of this application, an example in which the switching transistor Q11 and the switching transistor Q12 are NMOS transistors is used.

Optionally, a first electrode (which may be a drain) of the switching transistor Q11 may be used as an input of the power conversion unit 11. Both a second electrode (which may be a source) of the switching transistor Q11 and a first electrode (which may be a drain) of the switching transistor Q12 are electrically connected to a first terminal of the inductor L21. A second electrode (which may be a source) of the switching transistor Q12 may be electrically connected to the ground terminal. A second terminal of the inductor L21 may be used as the output of the power conversion unit 11.

Likewise, the power conversion unit 1n may include a switching transistor Qn1 (namely, a fifth switching transistor), a switching transistor Qn2 (namely, a sixth switching transistor), and an inductor L2n (namely, a second inductor). In embodiments of this application, an example in which the switching transistor Qn1 and the switching transistor Qn2 are NMOS transistors is used.

Optionally, a first electrode (which may be a drain) of the switching transistor Qn1 may be used as an input of the power conversion unit 1n. Both a second electrode (which may be a source) of the switching transistor Qn1 and a first electrode (which may be a drain) of the switching transistor Qn2 are electrically connected to a first terminal of the inductor L2n. A second electrode (which may be a source) of the switching transistor Qn2 may be electrically connected to the ground terminal. A second terminal of the inductor L2n may be used as an output of the power conversion unit 1n.

It can be learned that the energy recovery unit 23 and the power conversion unit in embodiments of this application are of a same topology structure. Certainly, the energy recovery unit 23 and the power conversion unit may alternatively be of another topology structure. This is not limited in embodiments of this application.

For example, refer to FIG. 3. The sampling module 3 may include a capacitor C3 (namely, a third capacitor) and a resistor R1 (namely, a first resistor).

A first terminal of the capacitor C3 may be used as the input of the sampling module 3, and the first terminal of the capacitor C3 is electrically connected to the power conversion module 1 and the load RL. A second terminal of the capacitor C3 may be electrically connected to a first terminal of the resistor R1, and a second terminal of the resistor R1 is electrically connected to the ground terminal. The second terminal of the capacitor C3 and the first terminal of the resistor R1 may be used as the output, of the sampling module 3, configured to output the first sampling voltage Vₛₑₙ₁.

The following describes the first gain-adjustable drive unit 41 and the second gain-adjustable drive unit 42 in detail with reference to FIG. 3.

In an example, refer to FIG. 3. The first signal amplification circuit 411 may include a proportional amplifier AMP1 (namely, a first proportional amplifier), a resistor R2 (namely, a second resistor), a resistor R3 (a third resistor), a resistor R4 (a fourth resistor), a resistor R5 (a fifth resistor), a direct current power supply DC1 (namely, a first direct current power supply), and a direct current power supply DC2 (namely, a second direct current power supply).

Optionally, a first terminal of each of the resistor R2 and the resistor R3 may be electrically connected to an inverting input of the proportional amplifier AMP1. A second terminal of the resistor R2 may be electrically connected to the ground terminal, and a second terminal of the resistor R3 may be electrically connected to an output of the proportional amplifier AMP1. The second terminal of the resistor R3 and the output of the proportional amplifier AMP1 may be used as the output, of the first signal amplification circuit 411, configured to be electrically connected to the control electrode of the switching transistor Q3. A first terminal of each of the resistor R4 and the resistor R5 may be electrically connected to a non-inverting input of the proportional amplifier AMP1, and a second terminal of the resistor R4 may be used as the input, of the first signal amplification circuit 411, configured to be electrically connected to the output of the sampling module 3. A second terminal of the resistor R5 may be electrically connected to a first terminal of the direct current power supply DC2, and a second terminal of the direct current power supply DC2 may be electrically connected to the ground terminal. A first terminal of the direct current power supply DC1 may be electrically connected to the first power amplification circuit 412, and a second terminal of the direct current power supply DC1 may be electrically connected to the ground terminal.

In embodiments of this application, the direct current power supply DC1 and the direct current power supply DC2 may be two independent direct current power supplies. Certainly, the direct current power supply DC1 and the direct current power supply DC2 may alternatively be a same direct current power supply. This is not limited in embodiments of this application.

It can be learned that the non-inverting input of the proportional amplifier AMP1 may be electrically connected to the sampling module 3. In this case, the first signal amplification circuit 411 may adjust a gain of the first sampling voltage Vₛₑₙ₁ by using the proportional amplifier AMP1 or the like, to turn on the switching transistor Q3 by using the first gain-adjustable drive voltage V_{d1}, and enable the compensation current I_{c} output by the compensation module 2 to be adjustable. This further ensures normal operation of the load RL.

In another example, refer to FIG. 3. The second signal amplification circuit 421 may include a proportional amplifier AMP2 (namely, a second proportional amplifier), a resistor R6 (namely, a sixth resistor), a resistor R7 (a seventh resistor), a resistor R8 (an eighth resistor), a direct current power supply DC3 (namely, a third direct current power supply), and a direct current power supply DC4 (namely, a fourth direct current power supply).

Optionally, a first terminal of each of the resistor R6 and the resistor R7 may be electrically connected to an inverting input of the proportional amplifier AMP2. A second terminal of the resistor R6 may be used as the input, of the second signal amplification circuit 421, that may be configured to be electrically connected to the output of the sampling module 3. A second terminal of the resistor R7 may be electrically connected to an output of the proportional amplifier AMP2, and the second terminal of the resistor R7 and the output of the proportional amplifier AMP2 may be used as the output of the second signal amplification circuit 421. A first terminal of the resistor R8 may be electrically connected to a non-inverting input of the proportional amplifier AMP2. A second terminal of the resistor R8 may be electrically connected to a first terminal of the direct current power supply DC4, and a second terminal of the direct current power supply DC4 may be electrically connected to the ground terminal. A first terminal of the direct current power supply DC3 may be electrically connected to the second power amplification circuit 422, and a second terminal of the direct current power supply DC3 may be electrically connected to the ground terminal.

In embodiments of this application, the direct current power supply DC3 and the direct current power supply DC4 may be two independent direct current power supplies. Certainly, the direct current power supply DC3 and the direct current power supply DC4 may alternatively be a same direct current power supply. This is not limited in embodiments of this application.

It can be learned that the inverting input of the proportional amplifier AMP2 may be electrically connected to the sampling module 3. In this case, the second signal amplification circuit 421 may adjust the gain of the first sampling voltage Vₛₑₙ₁ by using the proportional amplifier AMP2 or the like, to turn on the switching transistor Q4 by using the second gain-adjustable drive voltage V_{d2}, and bleed the output current Iₒᵤₜ of the power conversion module 1. This further avoids damage to the load. RL.

In still another example, as shown in FIG. 3, the first power amplification circuit 412 may include a switching transistor Q71 (namely, a seventh switching transistor) and a resistor R91 (namely, a ninth resistor). In embodiments of this application, an example in which the switching transistor Q71 is an NMOS transistor is used.

A first terminal of the resistor R91 may be electrically connected to the first terminal of the direct current power supply DC1. A second terminal of the resistor R91 may be electrically connected to a first electrode (which may be a drain) of the switching transistor Q71. The second terminal of the resistor R9 and the first electrode of the switching transistor Q71 may be used as the output, of the first power amplification circuit 412, that may be electrically connected to the control electrode of the switching transistor Q3. A control electrode of the switching transistor Q71 may be electrically connected to the output of the proportional amplifier AMP1. A second electrode (which may be a source) of the switching transistor Q71 may be electrically connected to the second electrode (which may be the source) of the switching transistor Q3 and the first electrode (which may be the drain) of the switching transistor Q4.

Similar to the first power amplification circuit 412, the second power amplification circuit 422 may include a switching transistor Q72 (namely, a seventh switching transistor) and a resistor R92 (namely, a ninth resistor). In embodiments of this application, an example in which the switching transistor Q71 is an NMOS transistor is used.

A first terminal of the resistor R91 may be electrically connected to the first terminal of the direct current power supply DC3. A second terminal of the resistor R91 may be electrically connected to a first electrode (which may be a drain) of the switching transistor Q72. The second terminal of the resistor R9 and the first electrode of the switching transistor Q72 may be used as the output, of the second power amplification circuit 422, electrically connected to the control electrode of the switching transistor Q4. A control electrode of the switching transistor Q72 may be electrically connected to the output of the proportional amplifier AMP2. A second electrode (which may be a source) of the switching transistor Q72 may be electrically connected to the ground terminal.

It can be learned that the first power amplification circuit 412 and the second power amplification circuit 422 are of a same topology structure. Certainly, the first power amplification circuit 412 and the second power amplification circuit 422 may alternatively be of different topology structures. This is not limited in embodiments of this application.

In embodiments of this application, the compensation module 2 can output the compensation current I_{c} with a faster response speed by using the switching transistor Q3. However, compared with the power conversion module 1, the compensation module 2 has lower operation efficiency. Opposite to the compensation module 2, the power conversion module 1 has higher operation efficiency, but the second direct current voltage V_{DC2} output by the power conversion module 1 has a slower response speed. After being connected in parallel, the compensation module 2 and the power conversion module 1 are electrically connected to the load RL. The compensation current I_{c} output by the compensation module 2 may be used to regulate the second direct current voltage V_{DC2} output by the power conversion module 1, so that the power conversion module 1 and the compensation module 2 complement each other in terms of functions. In this way, the power supply circuit 100 has advantages of a fast response speed and high operation efficiency, and meets a power supply requirement of the load RL.

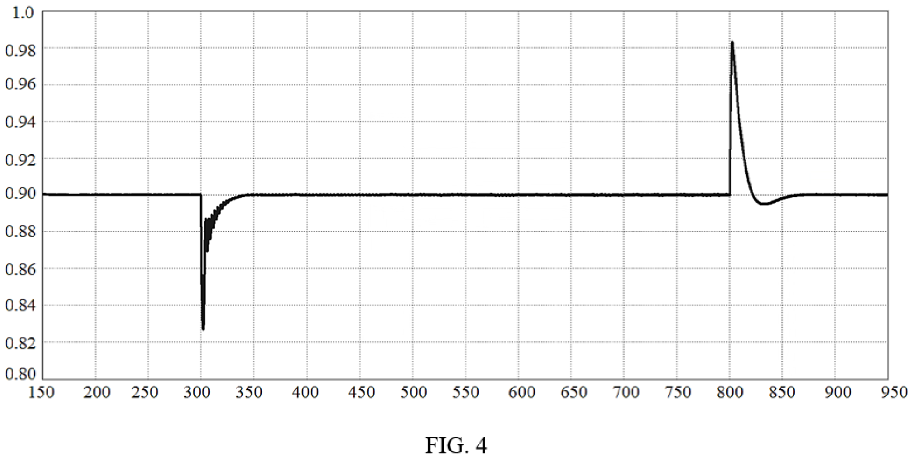

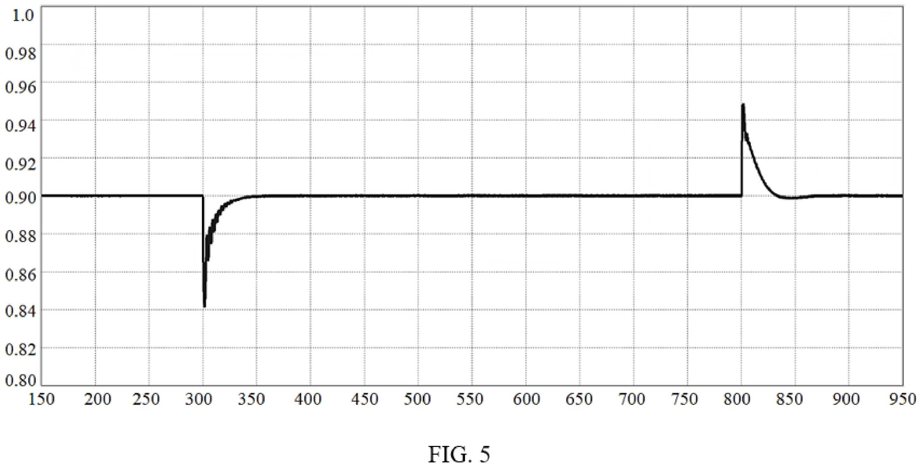

In some embodiments, FIG. 4 is a diagram of a waveform of an output voltage of a power supply circuit according to the related technology. In FIG. 4, a horizontal coordinate represents time (a unit may be a microsecond), and a vertical coordinate represents the output voltage of the power supply circuit according to the related technology. FIG. 5 is a diagram of a waveform of a second direct current voltage V_{DC2} output by a power supply circuit 100 according to an embodiment of this application. In FIG. 5, a horizontal coordinate represents time, and a vertical coordinate represents the second direct current voltage V_{DC2}.

It can be found by comparing FIG. 4 and FIG. 5 that, when a load is in a dynamic state, a sag and an overshoot that are of the output voltage of the power supply circuit according to the related technology are large, and a sag and an overshoot that are of the second direct current voltage V_{DC2} output by the power supply circuit 100 according to this embodiment of this application decrease correspondingly, and this can meet a power supply requirement of the load RL.

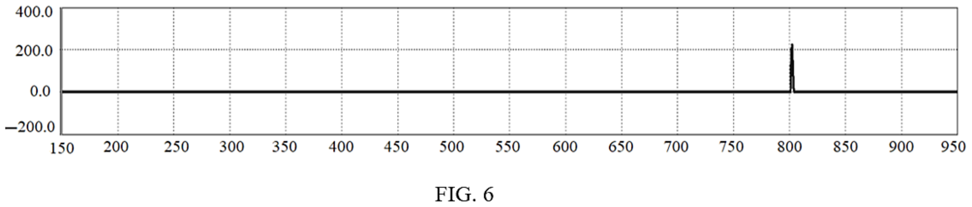

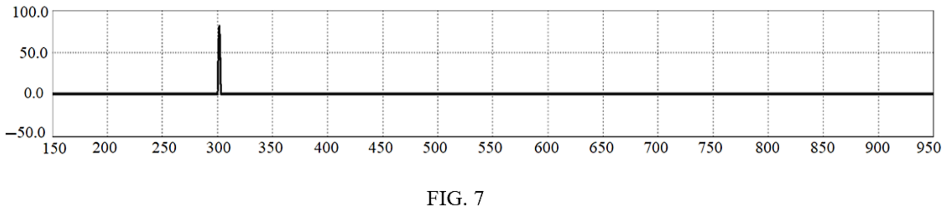

FIG. 6 shows a waveform of a compensation current when a load switches from a heavy load to a light load according to an embodiment of this application. FIG. 7 shows a waveform of a compensation current when the load switches from the light load to the heavy load. In FIG. 6 and FIG. 7, a horizontal coordinate represents time (a unit may be a microsecond), and a vertical coordinate represents the compensation current I_{c}. It can be seen from FIG. 6 and FIG. 7 that a power supply circuit 100 generates the compensation current I_{c} only when the load RL is in a dynamic state. The compensation current I_{c} may be 0 when the load RL is in a steady state.

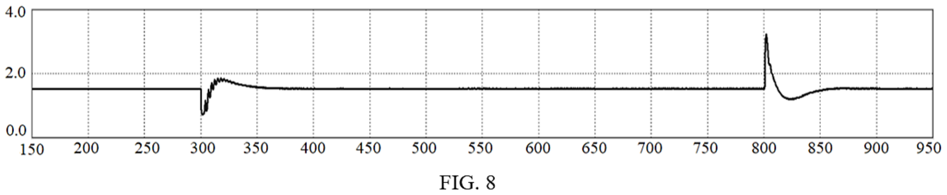

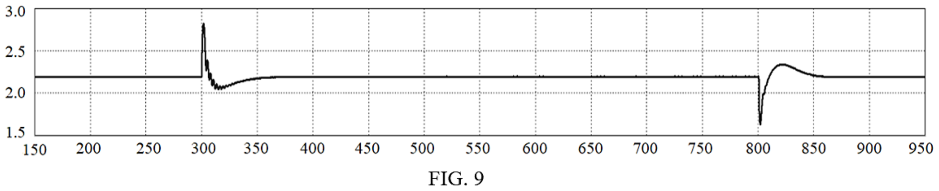

FIG. 8 shows a waveform of a second gain-adjustable drive voltage V_{d2} when a load RL switches from a heavy load to a light load according to an embodiment of this application. In FIG. 8, a horizontal coordinate represents time (a unit may be a microsecond), and a vertical coordinate represents the second gain-adjustable drive voltage V_{d2}. FIG. 9 shows a waveform of a first gain-adjustable drive voltage V_{d1} when the load RL switches from the light load to the heavy light load. In FIG. 9, a horizontal coordinate represents time (a unit may be a microsecond), and a vertical coordinate represents the first gain-adjustable drive voltage V_{d1}. It can be seen from FIG. 8 and FIG. 9 that the first gain-adjustable drive voltage V_{d1} or the second gain-adjustable drive voltage V_{d2} may follow fluctuation of a second direct current voltage V_{DC2}; and when the load RL is in a dynamic state, an amplitude of the first gain-adjustable drive voltage V_{d1} or an amplitude of the second gain-adjustable drive voltage V_{d2} increases; or when the load RL is in a steady state, the first gain-adjustable drive voltage V_{d1} or the second gain-adjustable drive voltage V_{d2} may remain unchanged.

Embodiments of this application further provide an electronic device, which may include a load RL and the power supply circuit 100. The power supply circuit 100 is electrically connected to the load RL, and is configured to supply power to the load RL.

Optionally, the electronic device may be a mobile phone, a computer, a Bluetooth device, or the like. This is not limited in embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power supply circuit, comprising a power conversion module, a compensation module, a sampling module, and a gain-adjustable drive module, wherein
the power conversion module is configured to: convert a first direct current voltage into a second direct current voltage and output the second direct current voltage to a load, wherein a voltage value of the second direct current voltage is less than a voltage value of the first direct current voltage;
the sampling module is configured to: collect a voltage of the load, convert the voltage of the load into a first sampling voltage, and output the first sampling voltage to the gain-adjustable drive module;
the gain-adjustable drive module is configured to output a gain-adjustable drive voltage to the compensation module based on the first sampling voltage; and
the compensation module is configured to output a compensation current to the load or bleed an output current of the power conversion module based on the first direct current voltage and the gain-adjustable drive voltage, wherein the compensation current is used to regulate the second direct current voltage.

2. The power supply circuit according to claim 1, wherein the gain-adjustable drive module comprises a first gain-adjustable drive unit and a second gain-adjustable drive unit;
an input of each of the first gain-adjustable drive unit and the second gain-adjustable drive unit is electrically connected to the collection module, and an output of each of the first gain-adjustable drive unit and the second gain-adjustable drive unit is electrically connected to the compensation module;
the first gain-adjustable drive unit is configured to output a first gain-adjustable drive voltage to the compensation module based on the first sampling voltage, wherein the first gain-adjustable drive voltage and the first sampling voltage are in an inversely proportional relationship; and
the second gain-adjustable drive unit is configured to output a second gain-adjustable drive voltage to the compensation module based on the first sampling voltage, wherein the second gain-adjustable drive voltage and the first sampling voltage are in a directly proportional relationship.

3. The power supply circuit according to claim 2, wherein the first gain-adjustable drive unit and the second gain-adjustable drive unit each comprise a signal amplification circuit and a power amplification circuit that are connected in series;
the signal amplification circuit is configured to: amplify a gain of the first sampling voltage, and output a second sampling voltage, wherein the second sampling voltage indicates the first sampling voltage after gain amplification; and
the power amplification circuit is configured to: amplify a power of the second sampling voltage, and output the first gain-adjustable drive voltage or the second gain-adjustable drive voltage.

4. The power supply circuit according to claim 3, wherein the signal amplification circuit is a proportional amplification circuit; and
the power amplification circuit comprises at least one of a common source amplification circuit, a common drain amplification circuit, and a common gate amplification circuit.

5. The power supply circuit according to any one of claims 2 to 4, wherein the compensation module comprises a bias unit and a compensation unit that are connected in series;
the bias unit is configured to output a third direct current voltage to the compensation unit based on the first direct current voltage, wherein a voltage value of the third direct current voltage is less than the voltage value of the first direct current voltage; and
the compensation unit is configured to output the compensation current to the load based on the third direct current voltage, the first gain-adjustable drive voltage, and the second gain-adjustable drive voltage.

6. The power supply circuit according to claim 5, wherein the bias unit comprises a first switching transistor, a second switching transistor, a first inductor, and a first capacitor; and
a first electrode of the first switching transistor is configured to receive the first direct current voltage, a second electrode of the first switching transistor and a first electrode of the second switching transistor are electrically connected to a first terminal of the first inductor, a second electrode of the second switching transistor is electrically connected to a ground terminal, a second terminal of the first inductor is electrically connected to a first terminal of the first capacitor, and a second terminal of the first capacitor is electrically connected to the ground terminal.

7. The power supply circuit according to claim 5 or 6, wherein the compensation unit comprises a third switching transistor and a fourth switching transistor; and
a control electrode of the third switching transistor is electrically connected to the first gain-adjustable drive unit, a control electrode of the fourth switching transistor is electrically connected to the second gain-adjustable drive unit, a first electrode of the third switching transistor is electrically connected to the bias unit, a second electrode of the third switching transistor and a first electrode of the fourth switching transistor are electrically connected to the first gain-adjustable drive unit, the second electrode of the third switching transistor and the first electrode of the fourth switching transistor are also electrically connected to the load, and a second electrode of the fourth switching transistor is electrically connected to the ground terminal.

8. The power supply circuit according to claim 7, wherein the compensation unit is specifically configured to:
when the load switches from a heavy load to a light load, turn on the fourth switching transistor based on the second gain-adjustable drive voltage, and bleed the output current of the power conversion module; or
when the load switches from a light load to a heavy load, turn on the third switching transistor based on the first gain-adjustable drive voltage, and output the compensation current to the load.

9. The power supply circuit according to any one of claims 5 to 8, wherein the compensation module further comprises an energy recovery unit, and the energy recovery unit is connected in parallel to the compensation unit;
the energy recovery unit is configured to: when the load switches from the heavy load to the light load, transmit a first-part output current of the power conversion module to the bias unit based on the second direct current voltage;
the bias unit is further configured to: store electric energy based on the first-part output current of the power conversion module; and release the electric energy to the load by using the compensation unit when the load switches from the light load to the heavy load; and
the compensation unit is further configured to: bleed a second-part output current of the power conversion module when the load switches from the heavy load to the light load.

10. The power supply circuit according to claim 9, wherein the power conversion module comprises a plurality of power conversion units and a second capacitor;
the plurality of power conversion units are connected in parallel to form a parallel branch, a first end of the parallel branch is used as an input of each of the plurality of power conversion units, the first end of the parallel branch is configured to receive the first direct current voltage, a second end of the parallel branch is used as an output of each of the plurality of power conversion units, the second end of the parallel branch is electrically connected to the collection module and the load, a first terminal of the second capacitor is electrically connected to the second end of the parallel branch, and a second terminal of the second capacitor is configured to be electrically connected to the ground terminal; and
each power conversion unit is configured to: convert the first direct current voltage into the second direct current voltage, and output the second direct current voltage to the load.

11. The power supply circuit according to claim 10, wherein the energy recovery unit and the power conversion units each comprise a fifth switching transistor, a sixth switching transistor, and a second inductor; and
a first electrode of the fifth switching transistor is used as an output of the energy recovery unit or the input of each power conversion unit, both a second electrode of the fifth switching transistor and a first electrode of the sixth switching transistor are electrically connected to a first terminal of the second inductor, a second electrode of the sixth switching transistor is electrically connected to the ground terminal, and a second terminal of the second inductor is used as an input of the energy recovery unit or the output of each power conversion unit.

12. The power supply circuit according to any one of claims 1 to 11, wherein the sampling module comprises a third capacitor and a first resistor; and
a first terminal of the third capacitor is used as an input of the sampling module, the first terminal of the third capacitor is electrically connected to the power conversion module and the load, a second terminal of the third capacitor is electrically connected to a first terminal of the first resistor, a second terminal of the first resistor is electrically connected to the ground terminal, and the second terminal of the third capacitor and the first terminal of the first resistor are used as an output of the sampling module.

13. An electronic device, comprising a load and the power supply circuit according to any one of claims 1 to 12, wherein the power supply circuit is electrically connected to the load.
